# EUROPEAN PATENT APPLICATION

(11) **EP 2 590 074 A1**
(43) Date of publication of application: **08.05.2013**
(21) Application number: 12190868.5
(22) Date of filing: 31.10.2012
(51) Int. Cl.: G06F 9/445

(54) **System for inserting services in a software application**

(30) Priority: 04.11.2011 IN MU31292011
(71) Applicant: Vserv Digital Services Pvt. Ltd., 400 063 Mumbai (IN)
(72) Inventor: Padwal, Ashay Vinayak, 400010 Mumbai (IN); Patel, Ashok Ramchandra, 400062 Mumbai (IN)
(74) Representative: Bradley, Adrian

(57) **Abstract**

A system for inserting one or more services within a software application is provided. The system comprises memory circuitry configured to receive and store a software application and a service module. The software application is defined by a first set of instructions and the service module defined by a second set of instructions. The system further comprises processing circuitry configured to execute the service module with the software application to generate a service integrated software application. The service module is configured to enable one or more online services on the software application by inserting a third set of instructions at pre-defined locations within the first set of instructions of the software application.

## Description

### BACKGROUND

The present invention relates to software applications. More particularly, the present invention relates to a system and method to insert one or more services into a software application.

Several software applications such as gaming applications for mobile phones are typically developed using programming languages like Java and C++. Typically, the source code of the application is compiled in binary object code format and packaged with application metadata and application resources before it is distributed to the end users. The distribution of such applications is typically done through online stores.

During the distribution phase, the online stores generally enable one or more online services such as advertisements within the software application. However, in order to introduce these services into the software application, it is often required to access and/or modify the source code of the software application. This process is usually a complex and time consuming process and in some instances may not be possible due to the inaccessibility of the source code.

Additionally, for a software developer, in order to enable online services in software application usually involves the integration of relevant libraries (SDK) or sometimes involves writing code to enable the relevant services within the software application. The developer then has to re-compile the application after the modifications are completed and generate new binary object code, re-test the new binary code and repackage the new object code with the resources and metadata for redistribution of the new software application with online services enabled.

Further, any changes in the look and feel, layout or sequence of present functionalities in terms of online services integration, or inclusion of new functionalities requires the developer to execute the entire process again, starting from re-modification of the source code, re-compilation, re-testing, re-packaging and ending with redistribution. Also, any such changes are not reflected in any of the software applications already installed in the user devices, unless those applications are upgraded by the users. Therefore, conventionally enabling such online services is time consuming and cumbersome for a software developer.

Therefore, there is a need to develop a tool that can easily enable the addition of online services onto a new or an already existing software application without altering the original source code of the software application.

### BRIEF DESCRIPTION

Briefly, according to one aspect of the present invention, a system for inserting one or more services within a software application is provided. The system comprises memory circuitry configured to receive and store a software application and a service module. The software application is defined by a first set of instructions and the service module defined by a second set of instructions. The system further comprises processing circuitry configured to execute the service module with the software application to generate a service integrated software application. The service module is configured to enable one or more online services on the software application by inserting a third set of instructions at pre-defined locations within the first set of instructions of the software application.

In another embodiment, a service wrapping tool for inserting one or more online services on a software application is provided. The service wrapping tool comprises a detector module configured to detect a start command and an end command of the software application and a service module to insert software instructions associated with the one or more online services at pre-defined locations in the software application to generate service integrated software application.

In another embodiment, a method for inserting one or more services within a software application. The method comprises receiving a software application defined by a first set of instructions and analyzing the first set of instructions to detect a start instruction and all exit instructions in the first set of instructions. The method further comprises inserting one or more online services on the software application by inserting a second set of instructions at pre-defined locations within the first set of instructions of the software application to generate a service integrated software application.

### DRAWINGS

These and other features, aspects, and advantages of the present invention will become better understood when the following detailed description is read with reference to the accompanying drawings in which like characters represent like parts throughout the drawings, wherein:

FIG. 1 is a block diagram of one embodiment of a system for inserting one or more services within a software application according to aspects of the present technique;

FIG. 2 is a flow chart illustrating one manner in which one or more services are inserted within a software application according to aspects of the present technique;

FIG. 3 is a block diagram of an embodiment of a service wrapping tool implemented according to aspects of the present technique;

FIG.4 through FIG. 9 are screen shots of the service wrapping tool; and

FIG. 10 is a block diagram of an example computing device.

### DETAILED DESCRIPTION

As discussed in detail below, embodiments of the present technique function to insert online services in a software application. References in the specification to "one embodiment", "an embodiment", "an exemplary embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

As used herein, "adapted to", "configured" and the like refer to mechanical or structural connections between elements to allow the elements to cooperate to provide a described effect; these terms also refer to operation capabilities of electrical elements such as analog or digital computers or application specific devices (such as an application specific integrated circuit (ASIC)) that are programmed to perform a sequel to provide an output in response to given input signals.

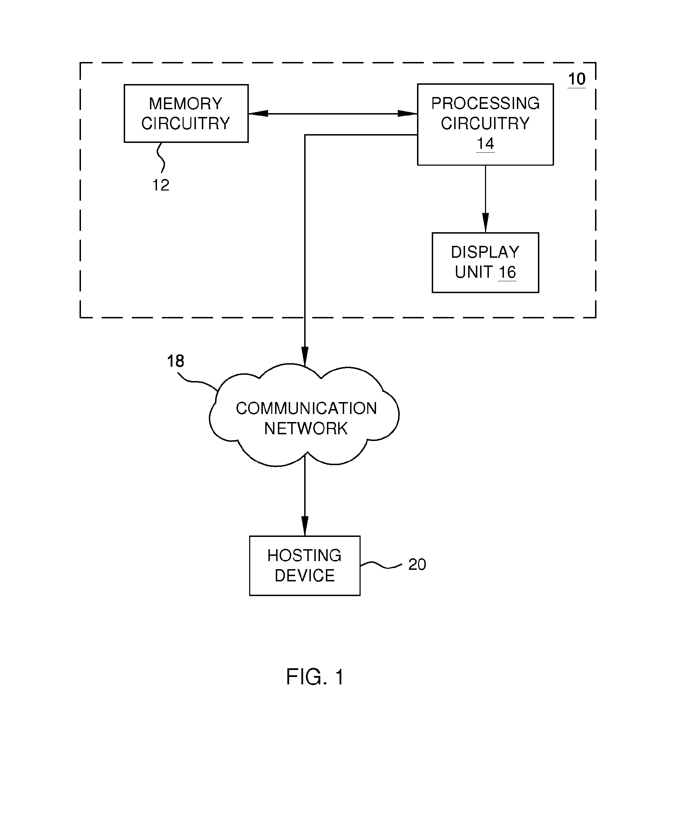

FIG. 1 is a block diagram of one embodiment of a system for inserting one or more services within a software application according to aspects of the present technique. System 10 comprises memory circuitry 12, processing circuitry 14 and display unit 16. Each component is described in further detail below.

Memory circuitry 12 is configured to store, among other data, a software application and a service module. The software application is defined by a first set of instructions. Similarly the service module is defined by a second set of instructions. It must be noted that a developer using system 10 or any other computing device may develop the software application.

Examples of the software application include gaming applications for hand-held devices, photography applications using cameras integrated with hand-held devices, content (interactive, video, audio, images & text) serving applications and the like. In one embodiment, online services include advertisements, financial transactions (such as try & buy and subscription), analytics to identify user behavior in the application, online data backup services, social media integration, networked game support, push notifications etc.

Processing circuitry 14 is configured to execute the service module with the software application to generate a service integrated software application. In one embodiment, the service module is configured to enable one or more online services on the software application by inserting a third set of instructions at pre-defined locations within the first set of instructions of the software application. In one embodiment, the pre-defined locations comprise a start location and/or an end location in the first set of instructions.

Processing circuitry is further configured to transmit the service integrated software application to other computing devices when desired. For example, the service integrated software application may be transmitted to a hosting system via a communication network 18. The hosting system 20 is configured to enable a plurality of users to access the service integrated software application. The service integrated software application is displayed on display unit 16. The manner in which the service integrated software application is generated is described in further detail below.

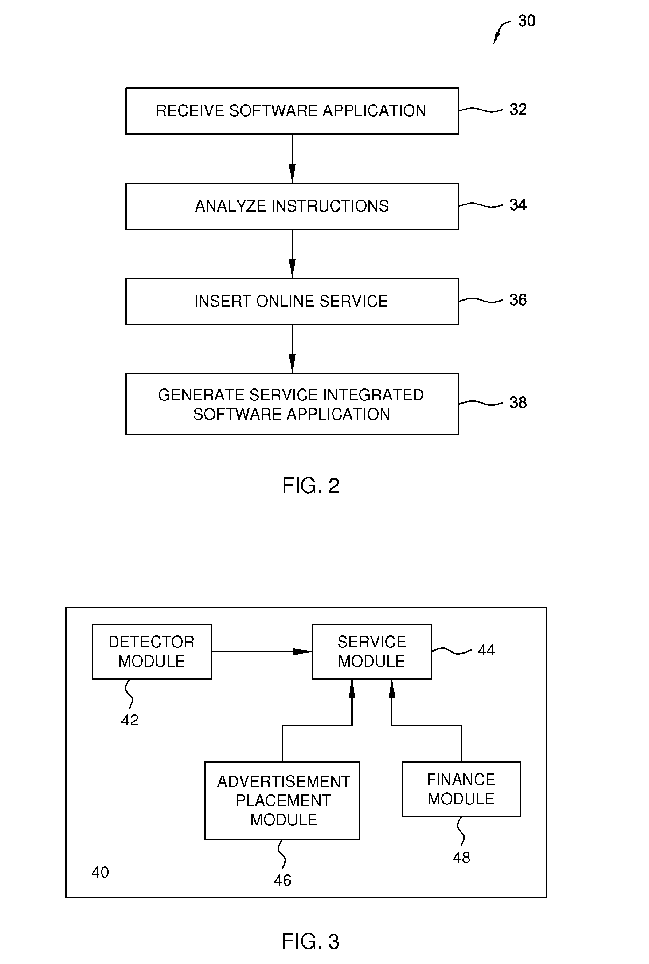

FIG. 2 is a flow chart illustrating one manner in which one or more services are inserted within a software application according to aspects of the present technique. Process 30 described one technique by which an online service is inserted within a software application to generate a service integrated software application. Each step of the process is described in further detail below.

At step 42, a software application is received. In one embodiment, the software application comprises source code that has been compiled in binary object code format and packaged with application metadata and application resources. In one embodiment, the software application is defined by a plurality of instructions. The instructions are usually written in programming languages like Java and C++.

At step 44, the instructions of the software application are analyzed. In one embodiment, the original software application is unpacked. Further an online services library and resources are added to unpacked application. A start instruction and one or more exit instructions are also identified.

At step 46, selected online services are inserted to the software application. Specifically, the start instruction of the software application is modified to start selected online services. In addition, a set of instructions is added to run the original start instruction after the completion of online services activity. Similarly all exit instructions are rreplaced with a set of instructions, which terminates the software application with instructions to launch the selected online services. Also, instructions are added to terminate the software application after the completion of the online services.

At step 48, the software application is packed to generate a service integrated software application. In one embodiment, the service integrated software application may be signed. Further, the service integrated software application is distributed to a plurality of users. In one embodiment, the initial set of online services that was added to the software application is changed to a new set of online services. In one embodiment, the new set of online services replaces the initial set of online services.

It must be noted that, the new set of online services will be reflected in the service integrated software application that have already been distributed to the plurality of users. In one embodiment, the initial set of online services is changed to the new set of online services after a fixed period of time. In one embodiment, the fixed period of time is 30 days. The options to select, insert and change the online services that are added may be provided in a service wrapping tool that is described in further detail below.

FIG. 3 is a block diagram of an embodiment of a service wrapping tool implemented according to aspects of the present technique. The service wrapping tool enables a software application developer to insert one or more services in the software application. The service wrapping tool 40 includes several modules such as detector module 42, service module 44, advertisement module 46 and finance module 48. Each module is described in further detail below.

The detector module 42 detects a start function in the software application. The detector module is also adapted to detect one or more exit functions in the software application. In one embodiment, bytecode analyzing tools are used to study the binary object code of the software application. In another embodiment, the object code is converted to a more basic format.

Service module 44 replaces the start function with a new start procedure. The end of the new start procedure is then linked to the original start unction, which launches the software application. Therefore, the end user experience at the start changes, and thus additional functionalities are enabled. Using similar methods, the exit function is detected and is similarly replaced by a new end procedure.

Advertisement placement module 46 is configured to place advertisements within the software application. Advertisements include both input and output elements. Output elements would include graphical elements like splash screens, which are typically displayed before the software application is launched, during transition screens within the software application or at the exit of the application. Output elements could also include video, audio, or other types of tactile content like device vibration. Input elements usually refer to elements that require user input using text boxes or selection controls. Input elements could also include information not directly controlled by the user, such as GPS status and data, radio status and data, Bluetooth status and data, clock, camera and light sensors status etc.

Advertisements also include other interactive elements such as on-board sensors like accelerometers, touch-sensitive screens, tilt sensors and special function buttons present on mobile devices. These input elements along with output elements are used to create interactive content, such as customer surveys or lead generation.

Finance module 48 is configured to control and monitor financial services related to the software application. Financial services may include, for example, billing and subscription services that allow a developer to bill a user for purchases and enable multiple forms of revenue models, like a usage based or time based subscription fee. The billing could be done through network operators or application distribution channels) or other third party storefronts. In one embodiment, the service wrapping tool enables developers to integrate with any billing solution to enable comprehensive monetization options and enable flexibility in revenue models.

Other modules that are included (but not shown) in the service wrapping tool include an analytics module that enables a developer or a distributor of the software application to collect usage statistics for the application which in turn enables the developer to improve the functionalities of the application, or improve its distribution. The tool may further include a social network services integration module that is configured to allow users to interact with their social network and allows him/her to post information about the application, or a high score in a game to a respective social circle, thus enabling greater distribution of the application, and at the same time, providing another layer of interactivity with the application developer and the user.

The service wrapping tool may also include data backup services module that is configured to allow the user's data and preferences to be stored on the application server as well as the user's device such as a mobile phone, thus enabling a backup of the information in case the data on the mobile device gets deleted. Further the service wrapping tool is configured to provide push notifications that will allow the developer to reach out and communicate with the user base of the software application. Further, the service wrapping tool may include a recommendation engine that allows end users to recommend the software application to a contact list stored on the phone thus helping in increasing the distribution of the application.

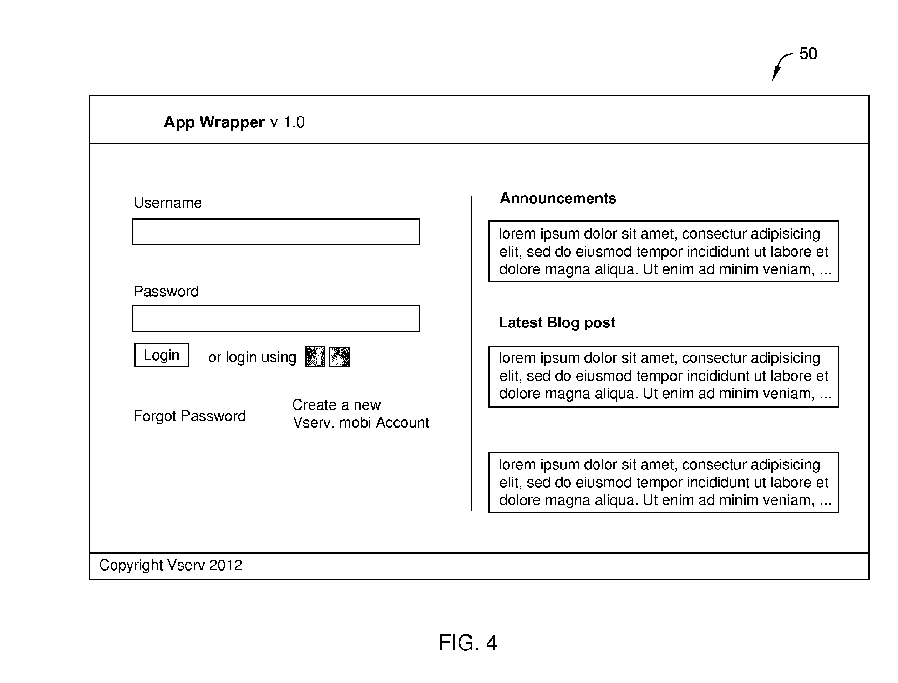

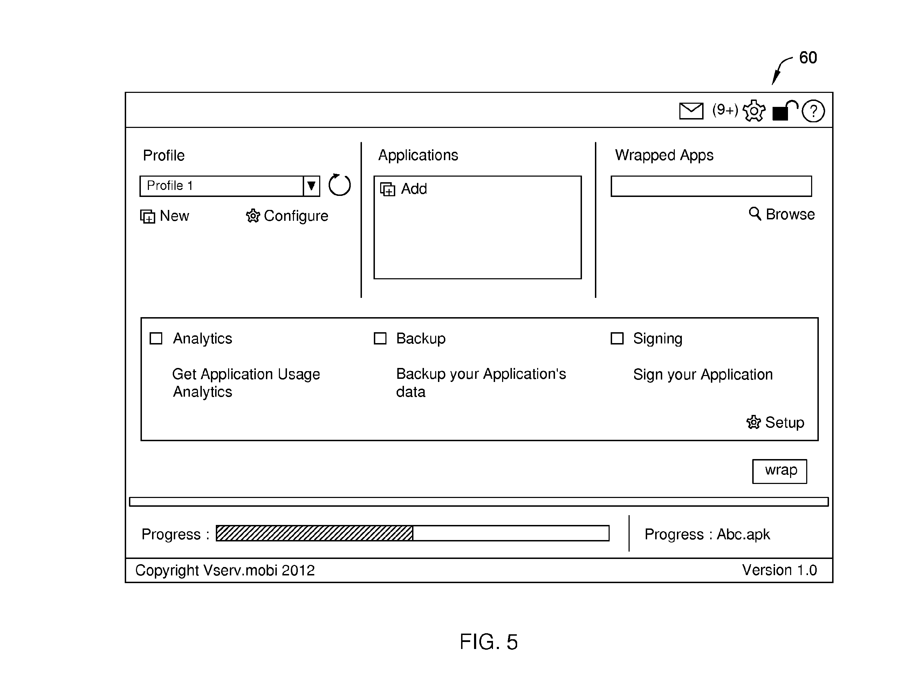

FIG. 4 through FIG. 10 represent example screen shots of the service wrapping tool. FIG. 4 is an example login screen 50 that enables a user to specify a username and password to access the service wrapping tool. FIG.5 is an example of a main screen that follows upon successful login, and is displayed to a user of the service wrapping tool. The main screen 60 enables the user to select one or more software applications for which one or more services are to be inserted.

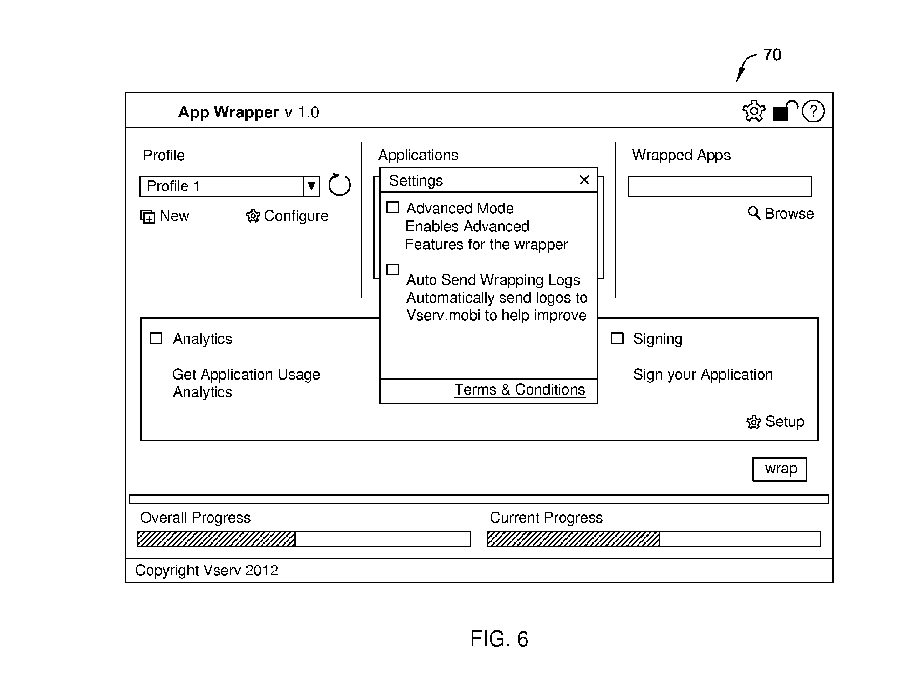

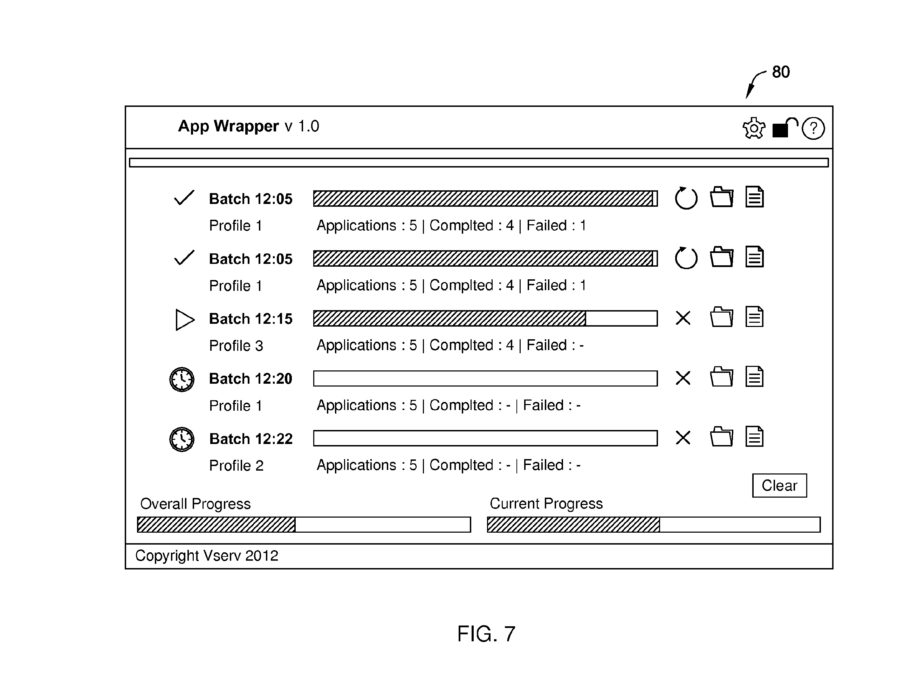

FIG. 6 illustrates one embodiment of a settings dialog box of the service wrapping tool. The screen shot 70 displays s settings dialog box that allows a user enable/disable certain settings. Further, an advanced mode option allows a user to select the advanced or simplified view of the service wrapping tool. FIG. 7 illustrates one example of a batch progress screen 80. The batch progress indicates, the progress and results of the process of inserting services in the software applications.

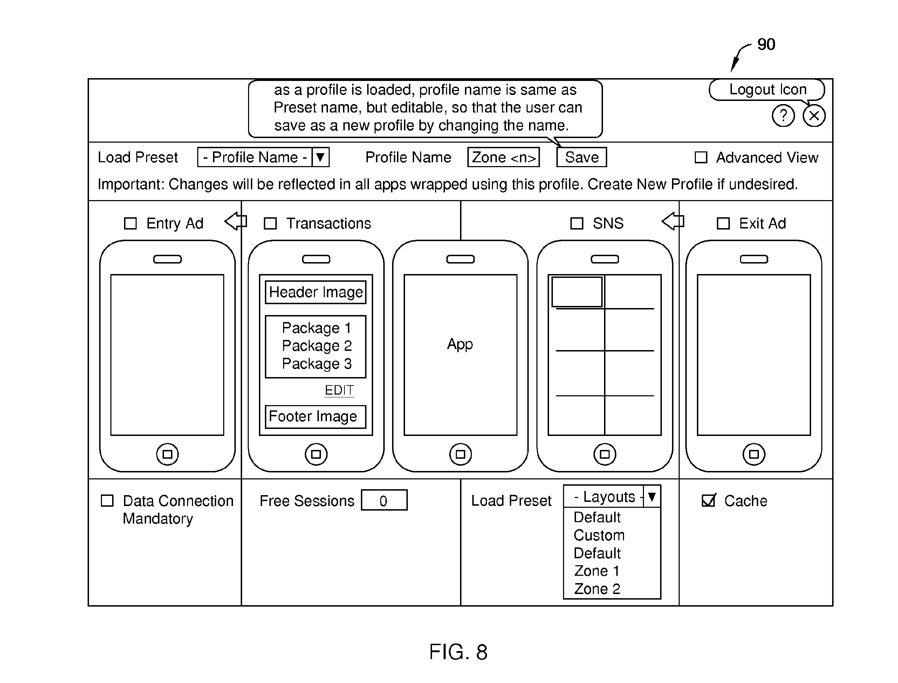

FIG. 8 illustrates one embodiment of a profiles settings screen of a service wrapping tool. The profile settings screen 90 lists options that are to be specified for each configuration parameter. The options will define the functionalities that are added to an application, their behaviour, their layout and their interaction with the users. The profile is largely divided into four parts, which define distinct functionalities. The user can define the placement and behaviour of both entry and exit advertisements, for example distinctively. The user can further define a billing and subscription model and social network services integration.

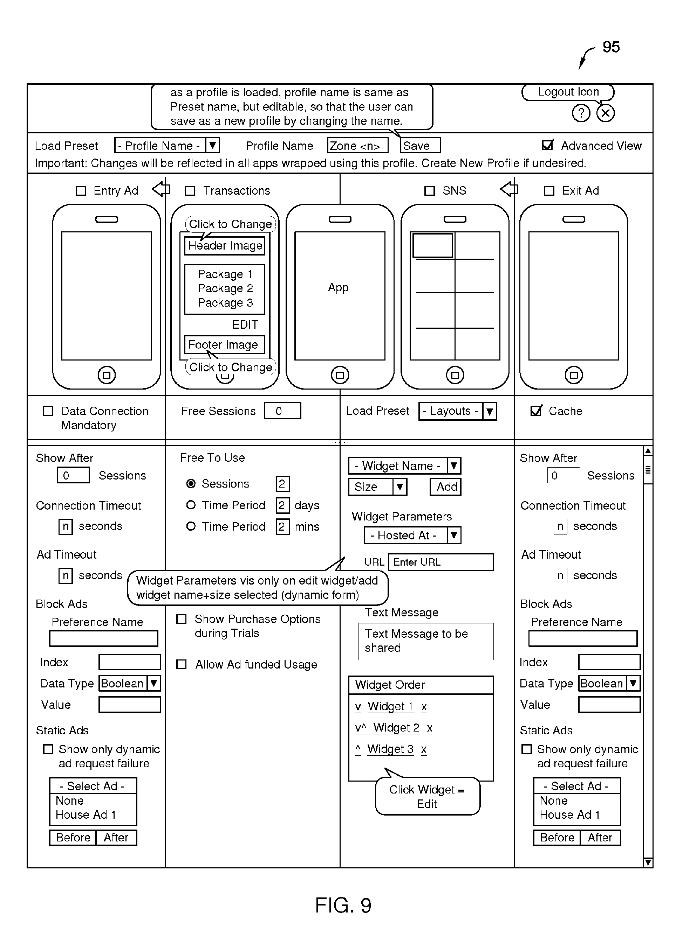

FIG.9 is an advanced view of a profile settings screen of FIG. 8. The advanced screen 95 allows the user of the service wrapping tool to customize more options and improve the functionalities that are added to the software application. The advanced view also allows the user to specify values for one or more configuration parameters.

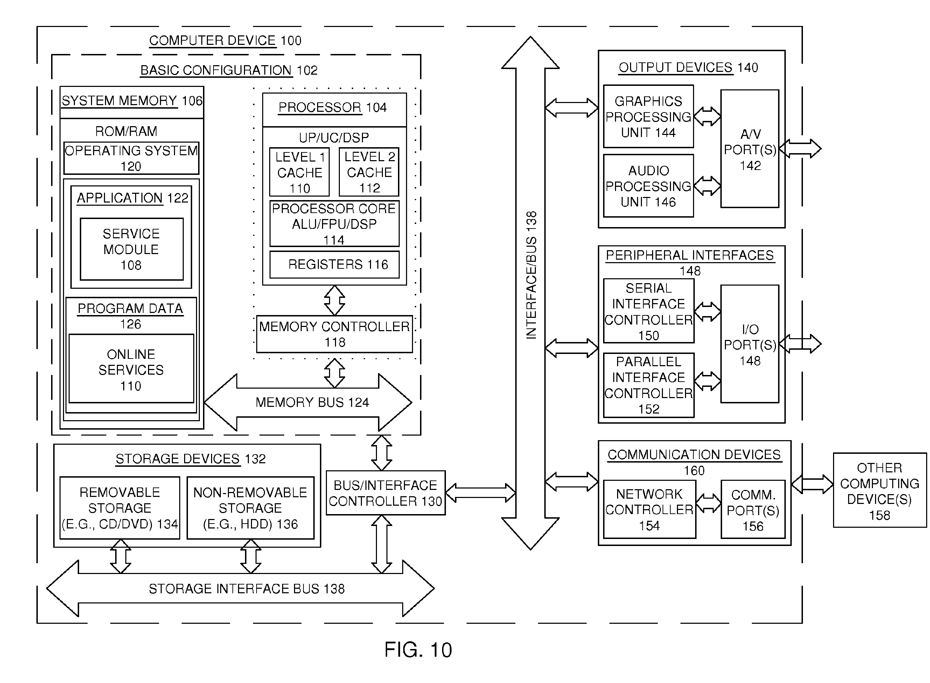

FIG. 10 is a block diagram illustrating an embodiment of a computing device 100 that is arranged for inserting one or more online services in a software application. In a very basic configuration 102, computing device 100 typically includes one or more processors 104 and a system memory 106. A memory bus 124 may be used for communicating between processor 104 and system memory 106.

Depending on the desired configuration, processor 104 may be of any type including but not limited to a microprocessor (µP), a microcontroller (µC), a digital signal processor (DSP), or any combination thereof. Processor 104 may include one more levels of caching, such as a level one cache 110 and a level two cache 112, a processor core 114, and registers 116. An example processor core 114 may include an arithmetic logic unit (ALU), a floating point unit (FPU), a digital signal processing core (DSP Core), or any combination thereof. An example memory controller 118 may also be used with processor 104, or in some implementations memory controller 118 may be an internal part of processor 104.

Depending on the desired configuration, system memory 106 may be of any type including but not limited to volatile memory (such as RAM), non-volatile memory (such as ROM, flash memory, etc.) or any combination thereof. System memory 106 may include an operating system 120, one or more applications 122, and program data 124. Application 122 include a service module 120 that is arranged to insert a one or more services in the software application. Program data 126 may include a data related to one or more online services 110 that may be inserted into various software applications such a gaming application for hand held devices. In some embodiments, application 122 may be arranged to operate with program data 126 on operating system 120 such that online services may be added to a software application. This described basic configuration 102 is illustrated in FIG. 1 by those components within the inner dashed line.

Computing device 100 may have additional features or functionality, and additional interfaces to facilitate communications between basic configuration 102 and any required devices and interfaces. For example, a bus/interface controller 130 may be used to facilitate communications between basic configuration 102 and one or more data storage devices 132 via a storage interface bus 138. Data storage devices 132 may be removable storage devices 134, non-removable storage devices 136, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 106, removable storage devices 134 and non-removable storage devices 136 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing device 100. Any such computer storage media may be part of computing device 100.

Computing device 100 may also include an interface bus 138 for facilitating communication from various interface devices (e.g., output devices 140, peripheral interfaces 148, and communication devices 160) to basic configuration 102 via bus/interface controller 130. Example output devices 142 include a graphics processing unit 144 and an audio processing unit 146, which may be configured to communicate to various external devices such as a display or speakers via one or more A/V ports 142. Example peripheral interfaces 148 include a serial interface controller 150 or a parallel interface controller 152, which may be configured to communicate with external devices such as input devices (e.g., keyboard, mouse, pen, voice input device, touch input device, etc.) or other peripheral devices (e.g., printer, scanner, etc.) via one or more I/O ports 148. An example communication device 160 includes a network controller 154, which may be arranged to facilitate communications with one or more other computing devices 158 over a network communication link via one or more communication ports 156.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Computing device 100 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Computing device 100 may also be implemented as a personal computer including both laptop computer and non-laptop computer configurations.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds compositions or biological systems, which can, of course, vary. It is also to be understood that the terminology used herein is for the purpose of describing particular embodiments only, and is not intended to be limiting.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

The following numbered statements further describe the invention:
1. A system for inserting one or more services within a software application, the system comprising:
   memory circuitry configured to stores a software application and a service module; wherein the software application is defined by a first set of instructions and the service module defined by a second set of instructions;
   processing circuitry configured to executes the service module with the software application to generate a service integrated software application; wherein the service module is configured to enable one or more online services on the software application by inserting a third set of instructions at pre-defined locations within the first set of instructions of the software application.
2. The system of statement 1, wherein the service module analyzes the first set of instructions to detect a start instruction and one or more exit instructions of the software application.
3. The system of statement 1, wherein the pre-defined locations comprises a start location and/or an end location in the first set of instructions.
4. The system of statement 1, wherein the one or more online services comprises advertisements.
5. The system of statement 1, wherein the software application is adapted for use in hand held devices.
6. The system of statement 1, wherein the processing device is further configured to transmit the service integrated software application to a hosting device; wherein the hosting device is configured to enable a plurality of users to access the service integrated software application.
7. A service wrapping tool for inserting one or more online services on a software application; the service wrapping tool comprising:
   a detector module configured to detect a start command and an end command of the software application; and
   a service module to insert software instructions associated with the one or more online services at pre-defined locations in the software application to generate service integrated software application.
8. The service wrapping tool of statement 7, further comprising an advertisement placement module configured to insert one or more advertisements within the service integrated software application.
9. The service wrapping tool of statement 8, wherein the one or more advertisements is selectively enabled.
10. The service wrapping tool of statement 7, further comprising a finance module configured to enable a plurality of financial activities associated with the service integrated software application.
11. A method for inserting one or more services within a software application, the method comprising:
   receiving a software application; wherein the software application is defined by a first set of instructions;
   analyzing the first set of instructions to detect a start instruction and all exit instruction in the first set of instructions;
   inserting first set of online services on the software application by inserting a second set of instructions at pre-defined locations within the first set of instructions of the software application to generate a service integrated software application.
12. The method of statement 11, further comprising distributing the service integrated software application to a plurality of users..
13. The method of statement 12, further comprising changing the first set of online services to a second set of online services in the software application; wherein the second set of online services is reflected in the service integrated software application distributed to the plurality of users.
14. The method of statement 13, wherein the second set of online services replaces the first set of online services.
15. The method of statement 13, wherein the first set of online services is changed to a second set of online services after a fixed period of time.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A system for inserting one or more services within a software application, the system comprising:
memory circuitry configured to store a software application and a service module; wherein the software application is defined by a first set of instructions and the service module is defined by a second set of instructions;
processing circuitry configured to execute the service module with the software application to generate a service integrated software application; wherein the service module is configured to enable one or more online services on the software application by inserting a third set of instructions at pre-defined locations within the first set of instructions of the software application.

2. The system of claim 1, wherein the service module analyzes the first set of instructions to detect a start instruction and one or more exit instructions of the software application.

3. The system of claim 1 or 2, wherein the pre-defined locations comprises a start location and/or an end location in the first set of instructions.

4. The system of any preceding claim, wherein the one or more online services comprises advertisements.

5. The system of any preceding claim, wherein the software application is adapted for use in hand held devices.

6. The system of any preceding claim, wherein the processing device is further configured to transmit the service integrated software application to a hosting device; wherein the hosting device is configured to enable a plurality of users to access the service integrated software application.

7. A service wrapping tool for inserting one or more online services on a software application; the service wrapping tool comprising:
a detector module configured to detect a start command and an end command of the software application; and
a service module to insert software instructions associated with the one or more online services at pre-defined locations in the software application to generate a service integrated software application.

8. The service wrapping tool of claim 7, further comprising an advertisement placement module configured to insert one or more advertisements within the service integrated software application.

9. The service wrapping tool of claim 8, wherein the one or more advertisements is selectively enabled.

10. The service wrapping tool of any of claims 7 to 9, further comprising a finance module configured to enable a plurality of financial activities associated with the service integrated software application.

11. A method for inserting one or more services within a software application, the method comprising:
receiving a software application; wherein the software application is defined by a first set of instructions;
analyzing the first set of instructions to detect a start instruction and all exit instruction in the first set of instructions;
inserting a first set of online services on the software application by inserting a second set of instructions at pre-defined locations within the first set of instructions of the software application to generate a service integrated software application.

12. The method of claim 11, further comprising distributing the service integrated software application to a plurality of users.

13. The method of claim 11 or 12, further comprising changing the first set of online services to a second set of online services in the software application; wherein the second set of online services is reflected in the service integrated software application.

14. The method of claim 13, wherein the second set of online services replaces the first set of online services.

15. The method of claim 13 or 14, wherein the first set of online services is changed to a second set of online services after a fixed period of time.
